# EUROPEAN PATENT SPECIFICATION

(11) **EP 0 947 235 B1**
(45) Date of publication and mention of the grant of the patent: **09.11.2005**
(21) Application number: 99106526.9
(22) Date of filing: 30.03.1999
(51) Int. Cl.: B01D 53/94

(54) **Exhaust gas purifying catalyst**
Katalysator zur Reinigung von Abgasen
Catalyseur pour la purification des gaz d'échappement

(30) Priority: 31.03.1998 JP 8482098; 22.09.1998 JP 26759798
(43) Date of publication of application: 06.10.1999
(73) Proprietor: Mazda Motor Corporation, Aki-gun, Hiroshima 735-0028 (JP)
(72) Inventor: Ueoka, Toshitsugu, Higashihiroshima-shi, Hiroshima (JP); Kurokawa, Takahiro, Hiroshima-shi, Hiroshima (JP); Murakami, Hiroshi, Hiroshima-shi, Hiroshima (JP); Watanabe, Yasuto, Iwakuni-shi, Hiroshima (JP)
(74) Representative: Zinnecker, Armin

(56) References cited:
- EP-A- 0 533 460
- EP-A- 0 710 499
- EP-A- 0 719 580
- US-A- 5 409 671
- PATENT ABSTRACTS OF JAPAN vol. 012, no. 270 (C-515), 27 July 1988 (1988-07-27) & JP 63 049255 A (MATSUSHITA ELECTRIC IND CO LTD), 2 March 1988 (1988-03-02) -& DATABASE WPI Week 8815 Derwent Publications Ltd., London, GB; AN 88-100695 XP002110308 & JP 63 049255 A (MATSUSHITA ELECTRIC IND. CO. LTD.)), 2 March 1988 (1988-03-02)
- PATENT ABSTRACTS OF JAPAN vol. 098, no. 003, 27 February 1998 (1998-02-27) & JP 09 299795 A (TOYOTA CENTRAL RES &DEV LAB INC), 25 November 1997 (1997-11-25)

## Description

This invention relates to an exhaust gas purifying catalyst suitable for lowering an emission level of NOx in an exhaust gas with an oxygen concentration greater than 10 % from a diesel engine and an exhaust gas with a high oxygen concentration such as greater than 4 % produced as a result of combustion of a lean fuel mixture with an air-to-fuel ratio greater than 22 in a lean burn engine.

One of exhaust gas purifying catalysts described in, for example, Japanese Unexamined Patent Publication No. 63 - 49255 comprises two parts, namely a first catalyst disposed in an exhaust gas stream for oxidizing NO to NO₂ and a second catalyst disposed in the exhaust gas stream downstream from the first catalyst for catalyzing reduction of NO₂ to N₂ have been known in the art. This exhaust gas purifying catalyst employs metals such as Ag and Mn, an oxide of Cu or halogenide for the first catalyst and zeolite for the second catalyst. Another one of exhaust gas purifying catalysts described in, for example, Japanese Unexamined Patent Publication No. 8 - 278131 comprises three parts, namely a first catalyst containing Ag supported on one of alumina and titania, a second catalyst containing Ag, Cu or Ni supported on one of alumina, titania, zeolite, silica and zirconia, and a third catalyst a metal such as Pt supported on one of alumina, titania, zeolite, silica and zirconia. The first catalyst is disposed in an exhaust gas stream and works to oxidize NO to NO₂, and a mixture of the second and third catalysts is disposed in the exhaust gas stream downstream from the first catalyst and works to catalyze reduction of NO₂. Still another exhaust gas purifying catalyst described in, for example, Japanese Unexamined Patent Publication No. 8 - 192050 comprises two parts, namely a first catalyst containing Ag, Co or Ni supported on alumina and a second catalyst containing Ag supported on **moldenite**. The first catalyst is disposed in an exhaust gas stream and works to oxidize NO to NO₂, and the second catalyst is disposed in the exhaust gas stream downstream from the first catalyst and works to catalyze reduction of NO₂. A further exhaust gas purifying catalyst described in, for example, Japanese Unexamined Patent Publication No. 9 - 299795 comprises two parts, namely a first catalyst containing Pt supported on alumina disposed in an exhaust gas stream for oxidizing NO to NO₂ and a second catalyst containing Pt and Ba supported on alumina disposed in the exhaust gas stream downstream from the first catalyst for adsorbing NO₂ and catalyzing reduction of adsorbed NO₂.

These prior art exhaust gas purifying catalysts work to oxidize NO in an exhaust gas to NO₂, and then to catalyze reduction of NO₂ for decomposition. In order to effectively cause reduction of NO₂, it is effective to utilize a reducing agent with a high activity and to oxidize NO to NO₂ with a high efficiency, EP-A-0 719 580 discloses an exhaust gas purifying catalyst having a first catalyst layer for oxidising NO to NO2 which includes at least one selected out of catalytic metals Ag, co, and Mn and a second catalyst layer for reducing the oxidized NO2 to NO, wherein said second catalyst layer is disposed downstream from said first catalyst layer, and said second catalyst layer containing a catalytic metal supported on a metal silicate. For purification of NO, there are two process. One of the two processes is to reduce and decompose NO₂ after oxidizing NO to NO₂. Another process is to directly reduce and decompose NO. In order to achieve more efficient purification of NO, the later process can not be disregarded. In the cases where exhaust gases contain sulfide, it is necessary to prevent catalytic components from being poisoned with the sulfide.

The present invention has its object to provide an exhaust gas purifying catalyst which can significantly lower the emission level of NO in an exhaust gas with a high oxygen concentration.

The exhaust gas purifying catalyst of the invention for purifying exhaust gas from a lean bum engine and/or a diesel engine has a first catalyst layer (2) for oxidizing NO to NO2 which contains at least one catalytic metal selected from a group of Ag, Co and Mn supported on at least one base material selected out of alumina, mesopore silicate and FAU-zeolite and a second catalyst layer (3) for reducing the oxidized NO2 to N2, said second catalyst layer (3) containing a metal silicate ion-exchanged by a catalytic noble metal and being disposed downstream from said first catalyst layer (3), wherein said first catalyst layer (2) further contains at least one selected out of catalytic metals Ce, Rh and Fe supported on said at least one base material. The second catalyst layer cracks HC having a large carbon number (e.g. 12 to 20) to HC having a small carbon number such as olefin and causes the clacked HC to react with NO₂ so as thereby to reduce the NO₂. Because of the craking function of the catalyst, the NO₂ oxidized by the first catalyst layer is efficiently reduced under existence of the HC having a small carbon number which has a high activity on the second catalyst.

A combination of two catalytic metals Ag and Co improves NO-to-NO₂ conversion efficiency of the catalyst or prevents aggravation of NOx purification efficiency due to sulfur compounds, for example preventing Ag from being poisoned with a sulfide. Alumina, mesopore-silicate and FAU zeolite, alone or in combination, are preferably used as a base material.

The first catalyst layer further contains at least one selected out of catalytic metals Ce, Rh and Fe with an effect of improving NO-to-NO₂ conversion efficiency and increasing resistance to sulfuration. Especially, a combination of Ag and Ni as the first catalytic metal provides a significant increase in NO-to-NO₂ conversion efficiency and great improvement of resistance to sulfuration. In this instance, the first catalyst preferably contains 20 to 60 g per one liter substrate of Ag and 20 to 50 g per one liter substrate of Ni.

In the case where the first catalyst layer contains a combination of Ag and Co as catalytic metals, the first catalyst layer may comprise an under catalyst layer containing Ag as a catalytic metal coated on a substrate and an over catalyst layer containing Co as a catalytic metal coated over the under catalyst layer, which provides an effect of significant increasing NO-to-NO₂ conversion efficiency and greatly improving resistance to sulfuration

On the other hand, the second catalyst layer contains a catalytic noble metal supported on a metal silicate through ion exchange. This is because it has a superior HC cracking function, the ion exchange increases dispersion of the catalytic metal, and the catalytic metal is made easy to attract NO₂ due to electrical charge deviation. A noble metal such as Pt is used as a preferable catalytic metal. It is to be noted that the zeolite on which a catalytic metal such as Pt is supported through ion exchange not only reduces and decomposes NO₂ but also directly reduces and decomposes NO. Accordingly, the reducing function of the second catalyst in cooperation with the oxidizing function of the first catalyst provides significantly improved NOx purification efficiency.

In the case where an exhaust gas purifying catalyst comprises a combination of a first catalyst layer containing Ag as a catalytic metal and a second catalyst layer containing a noble metal supported on metal silicate through ion exchange, it is preferred to form the first and second catalyst layers in the form of individual layers on a substrate. This is because Ag particles dispersed near noble metal particles impose an adverse affect on the activity of the noble metal. In this instance, it is preferred to dispose the first catalyst in an exhaust gas stream upstream from the second catalyst.

### BRIEF DESCRIPTION OF THE DRAWINGS

The foregoing and other objects and features of the invention will become apparent to one having ordinary skill in the art from the following description directed to preferred embodiments thereof when reading in conjunction with the accompanying drawings, in which:
Figure 1 is a schematic block diagram showing an exhaust gas purifying catalyst according to an embodiment of the invention;
Figure 2 is a graph showing the relationship between inlet temperature and NOx purification efficiency for sample exhaust gas purifying catalysts according to an embodiment of the invention and a comparative exhaust gas purifying catalyst;
Figure 3 is a graph showing C300 and maximum NOx purification efficiency for different sample exhaust gas purifying catalysts comprising different first catalysts;
Figure 4 is a graph showing NO conversion efficiency with respect to inlet temperature for different first catalysts;
Figure 5 is a graph showing C300 and maximum NOx purification efficiency for sample exhaust gas purifying catalysts comprising different second catalysts;
Figure 6 is a graph showing catalytic exhaust gas purification efficiency for a sample exhaust gas purifying catalyst according and a exhaust gas purifying comparative catalyst actually installed on a vehicle;
Figure 7 is a graph showing maximum NO-to-NO₂ conversion efficiency with respect to Ag content of an Ag/Al₂O₃ catalyst;
Figure 8 is a graph showing C250, C300 and maximum NO-to-NO₂ conversion efficiency for an Ag/Al₂O₃ catalyst and simultaneous impregnation type of sample Ag/Al₂O₃ first catalysts before sulfuration treatment;
Figure 9 is a graph showing C250, C300 and maximum NO-to-NO₂ conversion efficiency for an Ag/Al₂O₃ catalyst and simultaneous impregnation type of sample Ag/Al₂O₃ first catalysts after sulfuration treatment;
Figure 10 is a graph showing C250, C300 and maximum NO-to-NO₂ conversion efficiency for a simultaneous impregnation type of first catalysts and a separate impregnation type of first catalysts before sulfuration treatment;
Figure 11 is a graph showing C250, C300 and maximum NO-to-NO₂ conversion efficiency for a simultaneous impregnation type of first catalysts and a separate impregnation type of first catalysts after sulfuration treatment;
Figure 12 is a schematic cross-sectional view of a layered type of first catalyst;
Figure 13 is a graph showing C250, C300 and maximum NO-to-NO₂ conversion efficiency for an Ag/Al₂O₃ first catalyst and a layered type of first catalysts before sulfuration treatment;
Figure 14 is a graph showing C250, C300 and maximum NO-to-NO₂ conversion efficiency for an Ag/Al₂O₃ first catalyst and a layered type of first catalysts after sulfuration treatment;
Figure 15 is a graph showing C250 and maximum NO-to-NO₂ conversion efficiency with respect to Ni content of an Ag-Ni/Al₂O₃ first catalyst before and after sulfuration treatment; and,
Figure 16 is a graph showing C250 and maximum NO-to-NO₂ conversion efficiency with respect to Ag content of the Ag-Ni/Al₂O₃ first catalyst before and after sulfuration treatment.

### DETAILED DESCRIPTION OF PREFERRED EMBODIMENTS

In the following description, the term "C250 NO conversion efficiency" as used herein shall mean and refer to efficiency of NO-to-NO₂ conversion of an exhaust gas purifying catalyst at an inlet temperature of 250°C, the term "C300 NO conversion efficiency" as used herein shall mean and refer to efficiency of NO-to-NO₂ conversion of an exhaust gas purifying catalyst at an inlet temperature of 300°C, and the term "Cmax temperature" as used herein shall mean and refer to an inlet temperature at which an exhaust gas purifying catalyst shows maximum efficiency of NO-to-NO₂ conversion.

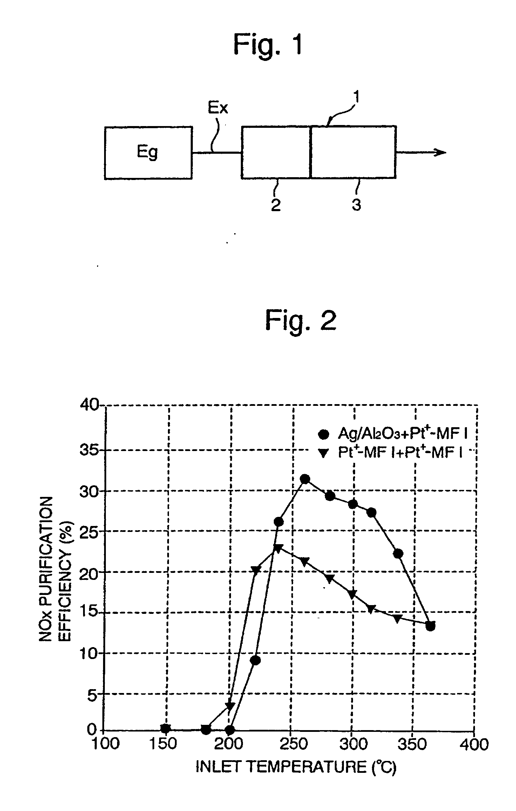

Referring to the drawings in detail and, in particular, to Figure 1 showing a structure of an exhaust gas purifying catalyst 1 of the invention suitable for an diesel engine, the catalyst 1 comprises a first or upstream catalyst 2 disposed in an exhaust gas stream Ex after a diesel engine Eg and a second or downstream catalyst 3 disposed in the exhaust gas stream Ex adjacent to and downstream from the first catalyst 2. The first catalyst 2 works to oxidize NO to NO₂, and the second catalyst 3 works to catalyze reduction of the NO₂. These first and second catalysts may be formed separately on a single substrate or on separate substrates. Further, the first and second catalysts 2 and 3 may be formed in layers on a single substrate. If the first and second catalysts 2 and 3 interfere in catalytic function with each other, they are formed in layers with a buffer layer intervened between the first and second catalyst layers. If the first and second catalysts 2 and 3 do not interfere in catalytic function with each other, they may be supported as a mixture on a substrate.

As an example (marked SC12) of the exhaust gas purifying catalyst 1, the first catalyst 2 consists of an Ag/Al₂O₃ catalyst in which Ag as a catalytic noble metal is supported on an alumina base material, and the second catalyst 3 consists of a Pt⁺-MFI catalyst in which Pt as a catalytic noble metal is supported on an MFI zeolite (composite zeolite ZSM-5) base material by ion exchange.

In preparation of the Ag/Al₂O₃ catalyst, a γ(gamma)-alumina powder having a high specific surface area as a base material and a hydrated alumina powder as a binder were mixed with a weight ratio of 10 : 1, and the mixture was added with water to provide a mixture slurry. A honeycomb substrate, which had a volume of 25 mL, 400 cells per square inch and a wall of 0.006 inch thickness, was dipped in and drawn from the mixture slurry and dried in an oven. The process was repeated until 150 g/L (150 g per one lit. of substrate) of the alumina base material was supported as a layer on the honeycomb substrate. The alumina layer on the honeycomb substrate 1 was impregnated with a specified quantity of solution which was prepared by dissolving a silver nitrate in deionized water and dried at 200°C in an oven and then calcined at 500°C for two hours in an electric furnace to support 0.44 mol/L Ag on the honeycomb substrate. The first catalyst contained impurities less than 1 %. In the following description, the impurities content of a catalyst is always less than 1 %.

In preparation of the Pt⁺-MFI catalyst as the second catalyst 3, a H-type of MFI zeolite (ZSM-5 made by PQ Corporation) having a **salic** ratio of 30 was thrown in water, and then stirred and heated until the solution attained a temperature of 80°C. Subsequently, the MFI zeolite solution was mixed with a specified quantity of solution of hexaamine-platinum-tetrachloride (Pt(NH₃)₆Cl₄), and the solution mixture was stirred and heated for three hours, and thereafter cooled and filtered to provide a solid mixture. The solid mixture was rinsed and dried to provide a powder of the mixture. The mixture powder was finally calcined at 350°C for two hours to prepare the Pt⁺-MFI catalyst.

The Pt⁺-MFI catalyst powder and hydrate alumina powder were mixed with a weight ratio of 10 : 1, and the mixture was added with water to provide a mixture slurry. A honeycomb substrate, which had a volume of 25 mL, 400 cells per square inch and a wall 0.006 inch thickness, was dipped in and drawn from the mixture slurry, and dried in an oven. The process was repeated until 150 g/L of the Pt⁺-MFI catalyst powder was supported as a layer on the honeycomb substrate. In this instance, the Pt⁺-MFI catalyst layer contained 0.3 g/L Pt.

In order to make NOx purification efficiency measurements, the first and second catalysts 2 and 3 were installed in an exhaust gas flow tunnel apparatus in order from the upstream side. The inlet temperature of exhaust gas was increased at a rate of 25°C/min. An exhaust gas was simulated as follows and circulated through the apparatus at a space velocity of 85000/h.

| | |
|---|---|
| HC | 170 ppmC (dodecane C₁₂H₂₆) |
| O₂ | 10 % |
| CO | 200 ppm |
| NO | 170 ppm |
| H₂O | 5 % |
| CO₂ | 4.5 % |
| N₂ | Reminder |

Figure 2 summarizes the result of NOx purification efficiency measurements for the sample exhaust gas purifying catalyst 1 together with a comparative exhaust gas purifying catalyst which was comprised of Pt⁺-MFI first and second catalysts. As apparent from Figure 2, the sample exhaust gas purifying catalyst 1 comprising the Ag/Al₂O₃ first catalyst and the Pt⁺-MFI second catalyst shows high NOx purification efficiency at exhaust gas temperatures higher than approximately 240°C.

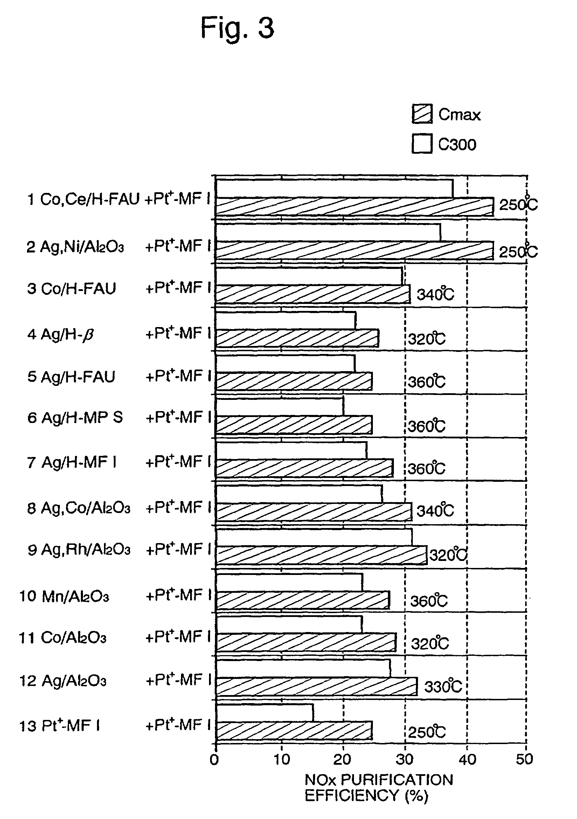

For sample exhaust gas purifying catalysts SC1 through SC12 comprised of different first catalysts and the Pt⁺-MFI second catalysts, respectively, NOx purification efficiency measurements were made under the same condition excepting that the inlet temperature of simulated exhaust gas was increased at a rate of 25°C/min after holding the simulated exhaust gas at 160°C for five minutes. The result of NOx purification efficiency measurements is summarized in Figure 3 in which C300 and Cmax indicate NOx purification efficiency of the exhaust gas purifying catalyst at an inlet temperature of 300°C and maximum NOx purification efficiency of the exhaust gas purifying catalyst.

The respective sample exhaust gas purifying catalysts SC1 to SC12 were comprised of the following first and second catalysts.

### Sample exhaust gas purifying catalyst SC1

First catalyst: Co-Ce/H-FAU
   H-type FAU zeolite as a base material was impregnated with catalytic metals Co and Ce simultaneously.
Second catalyst: Pt⁺-MFI

### Sample exhaust gas purifying catalyst SC2

First catalyst: Ag-Ni/Al₂O₃
   γ-alumina as a base material was impregnated with catalytic metals Ag and Ni simultaneously.
Second catalyst: Pt⁺-MFI

### Sample exhaust gas purifying catalyst SC3

First catalyst: Co/H-FAU
   H-type FAU zeolite as a base material was impregnated with a catalytic metal Co.
Second catalyst: Pt⁺-MFI

### Sample exhaust gas purifying catalyst SC4

First catalyst: Ag/H-β
   H-type β-zeolite as a base material was impregnated with a catalytic metal Ag.
Second catalyst: Pt⁺-MFI

### Sample exhaust gas purifying catalyst SC5

First catalyst: Ag/H-FAU
   H-type FAU zeolite as a base material was impregnated with a catalytic metal Ag.
Second catalyst: Pt⁺-MFI

### Sample exhaust gas purifying catalyst SC6

First catalyst: Ag/MPS
   Mesopore silicate (crystal silicate having 1 to 24 nm diameter of pores) as a base material was impregnated with a catalytic metal Ag.
Second catalyst: Pt⁺-MFI

### Sample exhaust gas purifying catalyst SC7

First catalyst: Ag/H-MFI
   H-type MFI zeolite as a base material was impregnated with a catalytic metal Ag.
Second catalyst: Pt⁺-MFI

### Sample exhaust gas purifying catalyst SC8

First catalyst: Ag-Co/Al₂O₃
   γ-alumina as a base material was impregnated with catalytic metals Ag and Co simultaneously.
Second catalyst: Pt⁺-MFI

### Sample exhaust gas purifying catalyst SC9

First catalyst: Ag-Rh/Al₂O₃
   γ-alumina as a base material was impregnated with catalytic metals Ag and Rh simultaneously.
Second catalyst: Pt⁺-MFI

### Sample exhaust gas purifying catalyst SC10

First catalyst: Mn/Al₂O₃
   γ-alumina as a base material was impregnated with a catalytic metal Ag.
Second catalyst: Pt⁺-MFI

### Sample exhaust gas purifying catalyst SC11

First catalyst: Co/Al₂O₃
   γ-alumina as a base material was impregnated with a catalytic metal Co.
Second catalyst: Pt⁺-MFI

### Sample exhaust gas purifying catalyst SC12

First catalyst: Ag/Al₂O₃
   γ-alumina as a base material was impregnated with a catalytic metal Ag.
Second catalyst: Pt⁺-MFI

### Comparative exhaust gas purifying catalyst CC13

First catalyst: Pt⁺-MFI
Second catalyst: Pt⁺-MFI

The exhaust gas purifying catalyst comprising the first catalyst containing a single catalytic metal was prepared in the same manner as the first catalyst 2 (Ag/Al₂O₃) of the sample exhaust gas purifying catalyst SC12 described above. Specifically, 150 g/L base material and 0.44 mol/L catalytic metal were supported on a 25 mL honeycomb substrate. The exhaust gas purifying catalyst comprising the first catalyst containing two catalytic metals was prepared by impregnating the base material with salts of the catalytic metals dissolved in deionized water and then drying and calcining it. The total amount of two catalytic metals contained in the first catalyst was 0.22 mol/L.

As apparent from Figure 3, the sample exhaust gas purifying catalysts SC1 to SC12 comprising the first catalyst which contains either one of catalytic metals Ag, Co and Mn show greater C300 NOx purification efficiency than the comparative exhaust gas purifying catalyst (marked CC13 in Figure 3) comprising the Pt⁺-MFI first catalyst and have maximum NOx purification efficiency approximately equal to or greater than that of the comparative exhaust gas purifying catalyst CC13. This fact indicates that a catalyst containing either one of catalytic metals Ag, Co and Mn works as the first or upstream catalyst with improved NOx purification efficiency. A comparison of the sample exhaust gas purifying catalysts SC4 through SC7 and XII containing Ag as a catalytic metal in the first catalyst with one another reveals that alumina is prominent as a base material. A comparison of the sample exhaust gas purifying catalysts SC2, SC8, SC9 and SC12 with one another reveals that a combination of Ag with another catalytic metal such as Rh and, in particular, Ni is desirable to be used together with an alumina base material of the first catalyst. Further, a comparison of the sample exhaust gas purifying catalysts SC3 and SC11 which contains Co as a catalytic metal in the first catalyst with one another reveals that FAU zeolite is prominent as a base material. As apparent from a comparison of the sample exhaust gas purifying catalysts SC1 and SC3, a combination of catalytic metals Co and Ce with an FAU zeolite base material provides remarkably improved NOx purification efficiency.

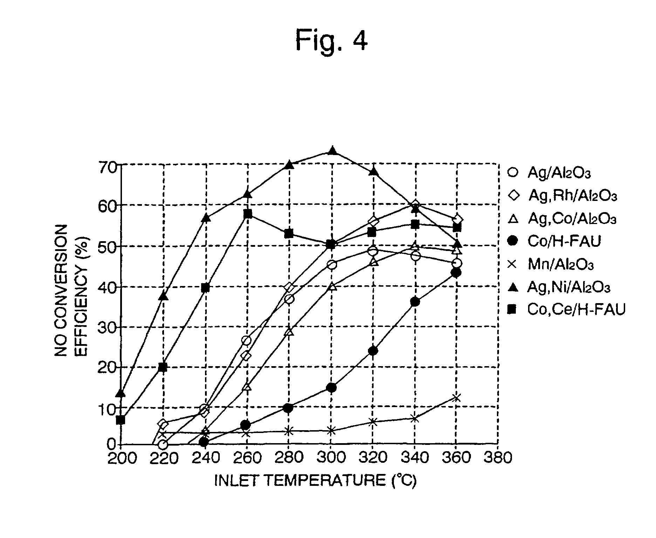

The sample exhaust gas purifying catalysts SC3 through SC12 have Cmax temperatures approximately 100°C higher than the comparative exhaust gas purifying catalyst CC13 comprising the Pt⁺-MFI first catalyst. This facts suggests that the NOx purification activity is developed in different ways between the sample exhaust gas purifying catalysts SC3 through SC12 and the comparative exhaust gas purifying catalyst CC1. That is, according to the inventor's experimental and experiential understanding is that the comparative exhaust gas purifying catalyst CC13 comprising Pt⁺-MFI first and second catalysts only converts NO for the most part by directly reducing and decomposing NO and that since, while each sample exhaust gas purifying catalysts SC3 - SC12 has a Pt⁺-MFI second catalyst, it has a first catalyst having the function of oxidizing NO to NO₂ disposed upstream from the Pt⁺-MFI second catalyst, the Pt⁺-MFI second catalyst has the function of reducing and decomposing NO₂ produced by the first catalyst in addition to the function of directly reducing and decomposing NO. This is well substantiated by measurements of NO conversion efficiency, the result of which is shown in Figure 4.

NO conversion efficiency measurements were made for the first or upstream catalysts of the sample exhaust gas purifying catalysts SC1 - SC3, SC8 - SC10 and SC12 under the same condition as the NOx purification efficiency measurements. In this instance, however, the inlet temperature of simulated exhaust gas was increased at a rate of 25°C/min after holding the simulated exhaust gas at 150°C for five minutes. As seen in Figure 4, each sample exhaust gas purifying catalysts have inlet temperatures for the maximum NO conversion efficiency agreeing with the maximum temperature, accurately or approximately, for NOx purification efficiency (shown in Figure 3), respectively.

For sample exhaust gas purifying catalysts SC14 through SC23 comprising the Ag/Al₂O₃ first catalysts and different second catalysts, respectively, NOx purification efficiency measurements were made under the same condition excepting that the inlet temperature of simulated exhaust gas was increased at a rate of 25°C/min after holding the simulated exhaust gas at 160°C for five minutes. The result of C300 NOx purification efficiency and Cmax temperature measurements is summarized in Figure 3.

The respective sample exhaust gas purifying catalysts SC14 through SC23 were comprised of the following first and second catalysts.

### Sample exhaust gas purifying catalyst SC14

First catalyst: Ag/Al₂O₃
Second catalyst: Pt⁺-MFI·Pt/H-MFI

### Sample gas purifying catalyst SC15

First catalyst: Ag/Al₂O₃
Second catalyst: Pt⁺-MFI
   (This sample was the same as the sample exhaust gas purifying catalyst SC12)

### Sample exhaust gas purifying catalyst SC16

First catalyst: Ag/Al₂O₃
Second catalyst: Pt-Ir/H-MFI
   H-type MFI zeolite as a base material was impregnated with catalytic metals Pt and Ir simultaneously.

### Sample exhaust gas purifying catalyst SC17

First catalyst: Ag/Al₂O₃
Second catalyst: Au/H-MFI
   H-type MFI zeolite as a base material was impregnated with a catalytic metal Au.

### Sample exhaust gas purifying catalyst SC18

First catalyst: Ag/Al₂O₃
Second catalyst: Ir/H-MFI
   H-type MFI zeolite as a base material was impregnated with a catalytic metal Ir.

### Sample exhaust gas purifying catalyst SC19

First catalyst: Ag/Al₂O₃
Second catalyst: Rh/H-MFI
   H-type MFI zeolite as a base material was impregnated with a catalytic metal Rh.

### Sample exhaust gas purifying catalyst SC20

First catalyst: Ag/Al₂O₃
Second catalyst: Pt/H-β
   H-type β-zeolite as a base material was impregnated with a catalytic metal Pt.

### Sample exhaust gas purifying catalyst SC21

First catalyst: Ag/Al₂O₃
Second catalyst: Pt/H-MFI
   H-type MFI zeolite as a base material was impregnated with a catalytic metal Pt.

### Sample exhaust gas purifying catalyst SC22

First catalyst: Ag/Al₂O₃
Second catalyst: Pt/Al₂O₃
   γ-alumina as a base material was impregnated with a catalytic metal Pt.

### Sample exhaust gas purifying catalyst SC23

First catalyst: Ag/Al₂O₃
Second catalyst: Ag/Al₂O₃
   γ-alumina as a base material was impregnated with a catalytic metal Ag.

Sample exhaust gas purifying catalyst SC14 was prepared by mixing Pt⁺-MFI catalyst powder and Pt/H-MFI catalyst powder with a weight ratio of 1 : 1 and wash-coating the mixture on a 25 mL honeycomb substrate such that the total weight of the base materials was 150 g/L and the amount of Pt was 0.15 g/L after ion-exchanged and 0.5 g/L after dried and solidified. The second catalyst of each sample exhaust gas purifying catalyst SC15 - SC23 was prepared by spray-drying a mixture of a base material and a catalytic metal solution with a specified ratio and further drying the mixture at a temperature between 100 and 200°C for one hours and calcining it at a temperature between 500 and 600°C for two hours to provide second catalyst powder. The catalyst powder was wash-coated on a 25 mL honeycomb substrate and subsequently dried at a temperature between 100 and 200°C for one hours and calcined at a temperature between 500 and 600°C for two hours. The amounts of base material and catalytic metal of the coated second catalyst were 150 g/L and 1 g/L, respectively.

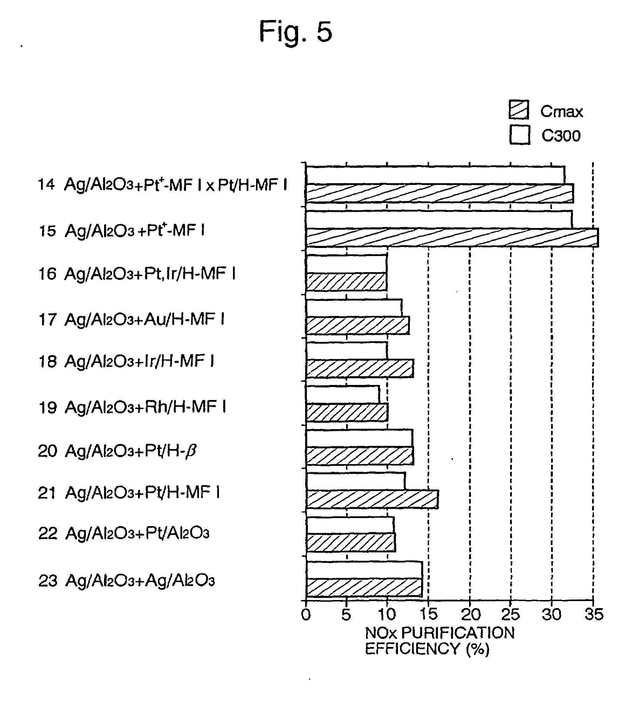

As apparent from Figure 5, the sample exhaust gas purifying catalysts SC14 and SC15 which comprise the second catalyst including Pt⁺-MFI show remarkably greater C300 NOx purification efficiency and maximum NOx purification efficiency than the remaining sample exhaust gas purifying catalysts SC16 to SC23. The remaining sample exhaust gas purifying catalysts SC16 to SC22 show which comprise the second catalyst including Pt or other catalytic metals supported on MFI or H-β zeolite show C300 NOx purification efficiency and/or maximum NOx purification efficiency inferior to those of the sample exhaust gas purifying catalyst SC23 which comprises the Ag/Al₂O₃ first and second catalysts. These facts indicate the usefulness of the Pt⁺-MFI catalyst and is considered to result from supporting Pt on MFI zeolite through ion exchange. There are some reasons for the remarkably superior C300 NOx purification efficiency and maximum NOx purification efficiency of the exhaust gas purifying catalysts SC14 and SC15 which contain Pt supported as a catalytic metal on MFI zeolite through ion exchange. Specifically, the Pt⁺-MFI catalyst has the function of clacking HC in an exhaust gas and then catalyzing reduction of NO₂ with the highly activated HC, ion exchange makes Pt possible to be dispersed and supported on MFI zeolite at level of atom, which increases dispersion of Pt with an effect of improving the catalytic activity, and Pt is made easy to attract NO₂ due to electrical charge deviation. The same is true for catalysts which contain another catalytic metal such as Rh and Pd in place of Pt or support a catalytic metal on metal silicate in place of MFI zeolite.

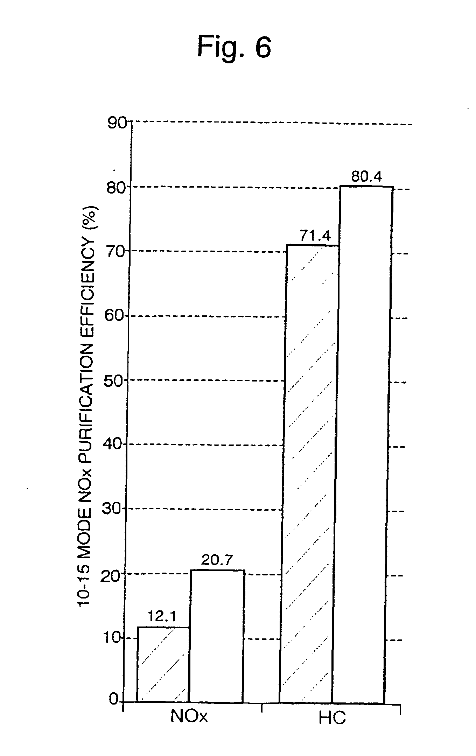

In order to evaluate performance of the exhaust gas purifying catalyst of the invention, field tests were made to measure NOx and HC purification efficiency in JPN 10-15 mode of the sample exhaust gas purifying catalyst SC9 comprising the Ag-Rh/Al₂O₃ first catalyst and the Pt⁺-MFI second catalyst. The Ag-Rh/Al₂O₃ first catalyst was coated on a 1.3 L honeycomb substrate such that it contained 30 g/L Ag and 1 g/L Rh supported by 150 g/L alumina, and the Pt⁺-MFI second catalyst was coated on a 2.0 L honeycomb substrate such that it contained 0.5 g/L Pt supported by 150 g/L MFI zeolite. The comparative exhaust gas purifying catalyst CC13 comprising the Pt⁺-MFI first and second catalysts. Each Pt⁺-MFI catalyst was coated on a 3.3 L honeycomb substrate such that it contained 0.5 g/L Pt supported by 150 g/L MFI zeolite. Each of these sample exhaust gas purifying catalyst SC9 and comparative exhaust gas purifying catalyst CC13 was mounted on a vehicle which had an overall weight of 1,625 kg and was equipped with a diesel engine having a displacement of 1.7 L/stroke. NOx and HC concentrations in the exhaust gas from the diesel engine were 50 to 60 ppm and 10 to 1,000 ppm, respectively. The result of the field tests is shown in Figure 6.

As apparent from Figure 6, the sample exhaust gas purifying catalyst SC9 has NOx and HC purification efficiency in JPN 10-15 mode both greater than the comparative exhaust gas purifying catalyst CC13.

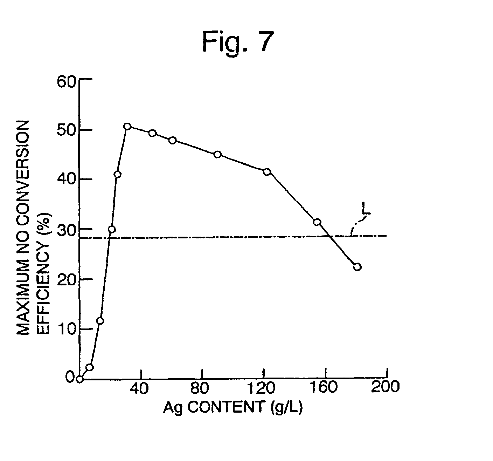

Conversion of NO to NO₂ by the Ag-Rh/Al₂O₃ first catalyst is a major reason for the greater exhaust gas purifying performance of the sample exhaust gas purifying catalyst SC9. In light of this, in order to evaluate the effect of Ag contents of the first Ag/Al₂O₃ on NO conversion efficiency, maximum NO conversion efficiency measurements were made under the same condition as the NO conversion efficiency measurements for the sample exhaust gas purifying catalysts SC1 - SC3, SC8 - SC10 and SC12, the result of which is shown in Figure 4, for sample exhaust gas purifying catalysts of the invention which comprised Ag/Al₂O₃ first catalysts having Ag contents different from one another. The Ag/Al₂O₃ first catalyst contained alumina and binder of 130 g/L in total weight and a weight ratio of 5 : 1. The result is shown in Figure 7 in which line L indicates the maximum NO conversion efficiency of an exhaust gas purifying catalyst comprising a Pt/Al₂O₃ first catalyst which had a 2 g/l Pt content. It is revealed from Figure 7 that the Ag content of the Ag/Al₂O₃ first catalyst is favorable to be between 15 and 150 g/L and, more specifically, between 20 and 120 g/L.

In addition to the evaluation of the effect of Ag contents of the first Ag/Al₂O₃ on NO conversion efficiency, the effect of a catalytic metal in combination of Ag of the first catalyst was further studied. NO conversion efficiency measurements were made for various first catalysts containing various combinations of two catalytic metals, Ag and another catalytic metal such as La, Ce, Fe, Co, Ni or Cu, supported by γ-alumina as a base material before and after sulfuration treatment. The sulfuration treatment is referred to exposing a first catalyst to an SO₂ gas consisting of 50 ppm SO₂, 20 % O₂ and the remainder of N₂ at 350°C for 30 minutes.

NO conversion efficiency measurements were made by exposing the first catalyst to an exhaust gas flow which was increased at a rate of 30°C/min. after held at 160°C for five minutes and circulated through the exhaust gas flow tunnel apparatus at a space velocity of 85000/h. The exhaust gas was simulated as follows.

| | |
|---|---|
| HC | 170 ppmC (dodecane C₁₂H₂₆) |
| O₂ | 10 % |
| CO | 200 ppm |
| NO | 170 ppm |
| CO₂ | 4.5 % |
| N₂ | Reminder |

The following sample first catalysts SCF1 to SCF7 were prepared for measurements of NO conversion efficiency before and after the sulfuration treatment.

### Sample first catalyst SCF1: Ag/Al₂O₃

γ-alumina as a base material was impregnated with a catalytic metal Ag.

### Sample first catalyst SCF2: Ag-La/Al₂O₃

γ-alumina as a base material was impregnated with first and second catalytic metals Ag and La, simultaneously.

### Sample first catalyst SCF3: Ag-Ce/Al₂O₃

γ-alumina as a base material was impregnated with first and second catalytic metals Ag and Ce, simultaneously.

### Sample first catalyst SCF4: Ag-Fe/Al₂O₃

γ-alumina as a base material was impregnated with first and second catalytic metals Ag and Fe, simultaneously.

### Sample first catalyst SCF5: Ag-Co/Al₂O₃

γ-alumina as a base material was impregnated with first and second catalytic metals Ag and Co, simultaneously.

### Sample first catalyst SCF6: Ag-Ni/Al₂O₃

γ-alumina as a base material was impregnated with first and second catalytic metals Ag and Ni, simultaneously.

### Sample first catalyst SCF7: Ag-Cu/Al₂O₃

γ-alumina as a base material was impregnated with first and second catalytic metals Ag and Cu, simultaneously.

In preparation of the sample first catalyst, a γ-alumina powder as a base material and a hydrated alumina powder as a binder were mixed with a weight ratio of 10 : 1, and the mixture was added with water to provide a mixture slurry. A honeycomb substrate, having a volume of 25 mL, 400 cells per square inch and a wall thickness of 0.006 inch, was dipped in and drawn from the mixture slurry and dried in an oven. The process was repeated until 150 g/L alumina base material (150 g per one lit. of substrate) was supported as a layer on the honeycomb substrate 1. The alumina layer on the honeycomb substrate 1 was impregnated with a specified quantity of a catalytic metal solution. The catalytic metal solution was prepared by dissolving a silver nitrate alone, or a mixture of a silver nitrate and a nitrate of another catalytic metal, in deionized water and dried at 200°C in an oven and then calcined at 500°C for two hours in an electric furnace. The base material coated on the honeycomb substrate was impregnated with the catalytic metal solution such that the first catalyst SCF1 contained 120 g/L γ-alumina as a base material and 30 g/L Ag, or each of the remaining first catalysts SCF2 to SCF5 contained 120 g/L γ-alumina as a base material, 30 g/L Ag and 0.44 mol/L other catalytic metal.

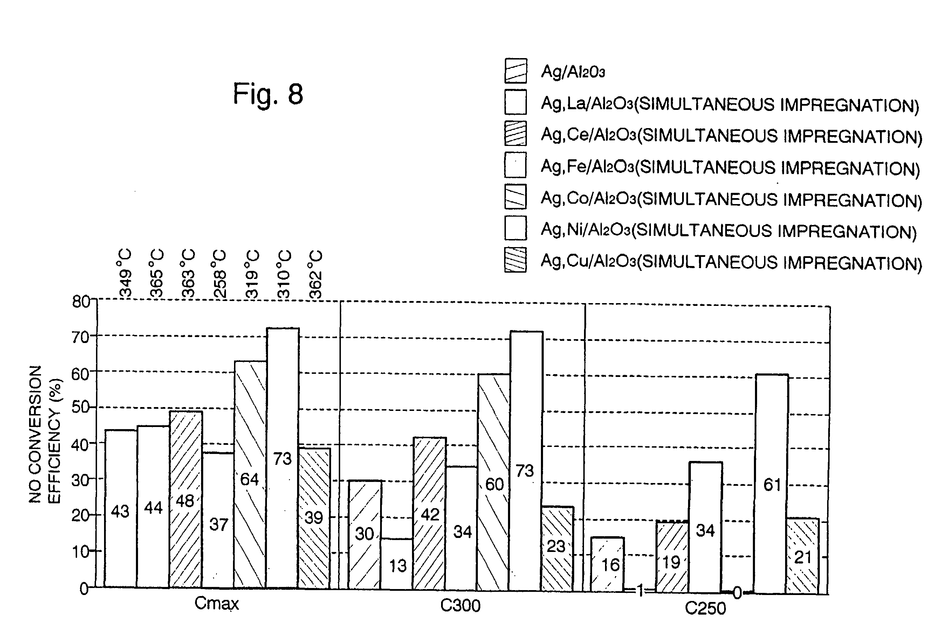

The result of measurements of C300, C250 and maximum NO conversion efficiency of the respective sample first catalysts SCF1 to SCF5 before the sulfuration treatment is shown in Figure 8. A temperature at which the maximum NO conversion efficiency (Cmax) was attained is indicated in Figure 8. As apparent from Figure 8, the sample first catalysts SCF1 and SCF3 to SCF6 before the sulfuration treatment show C300 and C250 NO conversion efficiency greater than the sample first catalysts SCF2 and SCF7 before the sulfuration treatment. It is also apparent that the sample first catalyst SCF4 shows maximum NO conversion efficiency slightly smaller than the sample first catalyst SCF1 and, however, shows C300 and C250 NO conversion efficiency greater than the sample first catalyst SCF1 and that the combinations of Ag and another catalytic metal are contributory to improving initial NO conversion efficiency of the first catalysts, in particular of the first catalyst SCF6. The first catalyst SCF5 show high initial NO conversion efficiency especially at higher temperatures.

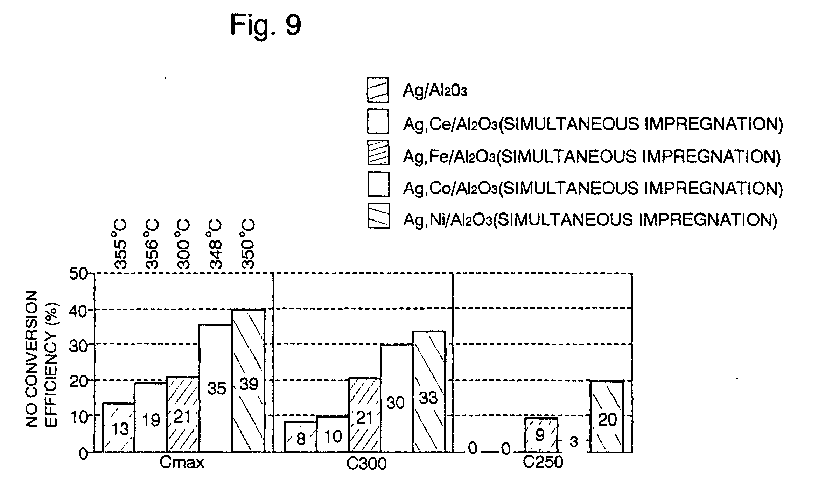

In light of the result of NO conversion efficiency of the first catalysts before the sulfuration treatment, measurements of NO conversion efficiency were made for the first catalysts SCF1 and SCF3 to SFC6 after the sulfuration treatment, the result of which is shown in Figure 9. As apparent from Figure 9, the first catalyst containing Ag in combination of Ce, Fe, Co or Ni after the sulfuration treatment shows significantly improved NO conversion efficiency as compared with the first catalyst containing Ag alone. The combination of Ag and Fe, Co or Ni is especially superior. This fact reveals that the combinations of Ag and another catalytic metal such as Ce, Fe, Co and Ni are contributory to improving NO conversion efficiency of the first catalysts after the sulfuration treatment.

It is therefore revealed from the above evaluation that the combination of catalytic metals, such as Ag in combination with Ag, Ce, Fe, Co or Ni, is effective in improving NO conversion efficiency and resistance to sulfuration of the first catalyst.

In order to study an effect of simultaneous impregnation or separate impregnation with catalytic metals on NO conversion efficiency of a first catalyst before and after the sulfuration treatment, measurements of C300, C250 and maximum NO conversion efficiency were made for various first catalysts.

The following sample first catalysts SCF8 to SCF13 were prepared.

### Sample first catalyst SCF8: Co-Ce/FAU

FAU zeolite as a base material was impregnated with a first catalytic metal Co and thereafter with a second catalytic metal Ce.

### Sample first catalyst SCF9: Co-Ce/FAU

FAU zeolite as a base material was impregnated with first and second catalytic metals Co and Ce, simultaneously.

### Sample first catalyst SCF10: Ni-Ag/Al₂O₃

γ-alumina as a base material was impregnated with a first catalytic metal Ag and thereafter with a second catalytic metal Ni.

### Sample first catalyst SCF11: Co-Ag/Al₂O₃

₃γ-alumina as a base material was impregnated with a first catalytic metal Ag and thereafter a second catalytic metal Co.

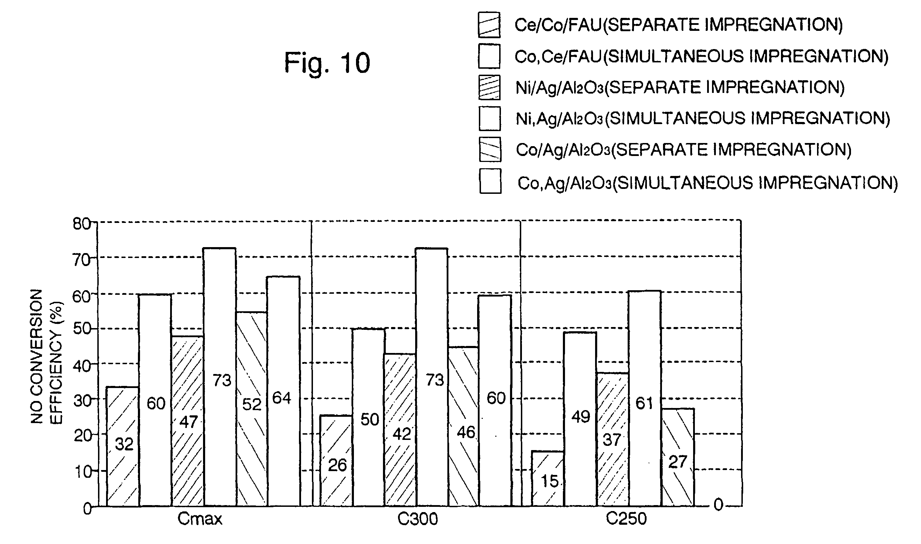

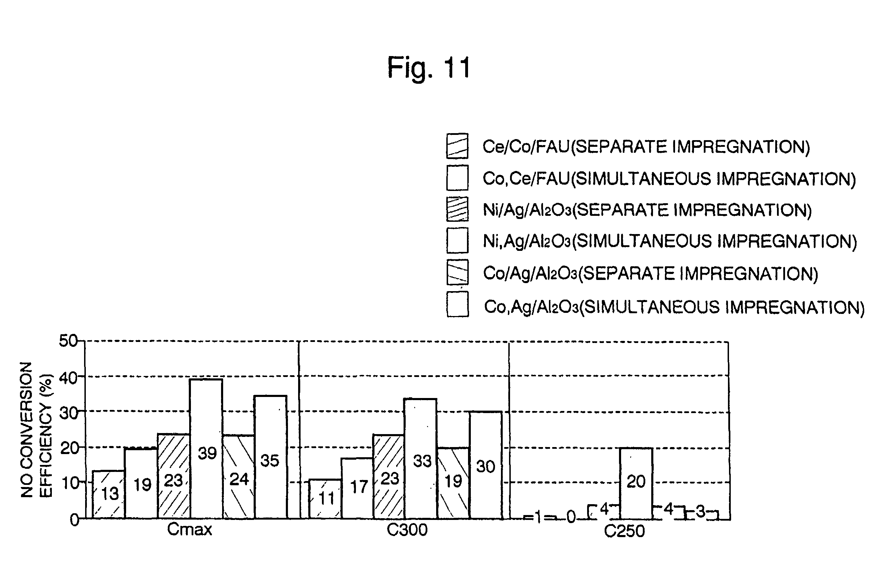

The respective sample first catalysts were prepared by the same manner for the sample first catalysts SCF1 - SCF7 Each of the sample first catalysts SCF8 and SCF9 coated on a honeycomb substrate contained 120 g/L base material, 0.88 mol/L Co and 0.44 mol/L Ce. Each of the sample first catalysts SCF 10 and SCF 11 coated on a honeycomb substrate contained 120 g/L base material, 30 g/L Ag, and 0.44 mol/L Ni or 0.44 mol/L Co. The results of measurements of C300, C250 and maximum NO conversion efficiency of the respective sample first catalysts SCF8 to SCF11 before and after the sulfuration treatment are shown in Figures 10 and 11, respectively. C300, C250 and maximum NO conversion efficiency of the respective sample first catalysts SCF5 and SCF6 before and after the sulfuration treatment are incorporated in Figures 10 and 11, respectively.

As apparent from Figures 10 and 11, while separate impregnation with two catalytic metals improves NO conversion efficiency of the first catalyst and, however, is inferior in improvement of NO conversion efficiency of the first catalyst to simultaneous impregnation with two catalytic metals. This is considered from the reason that the second catalytic metal Ce, Ni or Co which is used in combination with a first catalytic metal Ag or Co exhibits its catalytic effect as a result of a uniform mix of the first and second catalytic metals at level of atom rather than a result of physically covering up the first catalytic metal with the second catalytic metal.

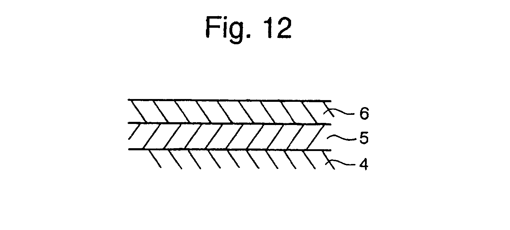

Figure 12 shows a double layer first catalyst according to another embodiment of the invention. A double layer first catalyst comprises a first catalytic metal under layer 5 formed on a honeycomb substrate 4 and a second catalytic metal over layer 6 formed over the first catalytic metal layer 5. The first catalytic metal under layer 5 comprises a layer of a mixture of a base material and binder coated on the honeycomb substrate 5 and impregnated with a first catalytic metal. The second catalytic metal over layer 6 comprises a layer of a mixture of an oxide of a second catalytic metal and binder coated over the first catalytic metal under layer 5.

Evaluation of performance of the double layer first catalyst was made by measuring C300, C250 and maximum NOx and HC purification efficiency. The following sample double layer first catalyst SCF14 to SCF19 were prepared.

### Sample double layer first catalyst SC 14: Ag/CeO₂/Al₂O₃

Under layer: Ag/Al₂O₃
   γ-alumina as a base material was impregnated with Ag as a first catalytic metal
Over layer: CeO₂
   A layer of CeO₂ as an oxide of Ce as a second catalytic metal was formed over the under layer

### Sample double layer first catalyst SC15: Ag/MnO₂/Al₂O₃

Under layer: Ag/Al₂O₃
   γ-alumina as a base material was impregnated with Ag as a first catalytic metal
Over layer: MnO₂
   A layer of MnO₂ as an oxide of Mn as a second catalytic metal was formed over the under layer

### Sample double layer first catalyst SC16: Ag/FeO₂/Al₂O₃

Under layer: Ag/Al₂O₃
   γ-alumina as a base material was impregnated with Ag as a first catalytic metal
Over layer: Fe02
   A layer of FeO₂ as an oxide of Fe as a second catalytic metal was formed over the under layer

### Sample double layer first catalyst SC17: Ag/CoO/Al₂O₃

Under layer: Ag/Al₂O₃
   γ-alumina as a base material was impregnated with Ag as a first catalytic metal
Over layer: CoO
   A layer of CoO as an oxide of Co as a second catalytic metal was formed over the under layer

### Sample double layer first catalyst SC18: Ag/NiO/Al₂O₃

Under layer: Ag/Al₂O₃
   γ-alumina as a base material was impregnated with Ag as a first catalytic metal
Over layer: NiO
   A layer of NiO as an oxide of Ni as a second catalytic metal was formed over the under layer

### Sample double layer first catalyst SC19: Ag/CuO/Al₂O₃

Under layer: Ag/Al₂O₃
   γ-alumina as a base material was impregnated with Ag as a first catalytic metal
Over layer: CuO
   A layer of CuO as an oxide of Cu as a second catalytic metal was formed over the under layer

The respective sample double layer first catalysts were prepared by dipping an Ag/Al₂O₃ under layer prepared by the manner for preparing the Ag/Al₂O₃ first catalyst described above in and drawing from a slurry of a mixture of an oxide of a second catalytic metal, binder and water to form an over layer of an oxide of the second catalytic metal. The double layer first catalyst was blown dry and then calcined at 500°C for two hours in an electric furnace. Each of the sample double layer first catalysts SCF14 to SCF19 formed on the honeycomb substrate contained 120 g/L base material, 30 g/L first catalytic metal, i.e. Ag, and 0.5 mol/L second catalytic metal.

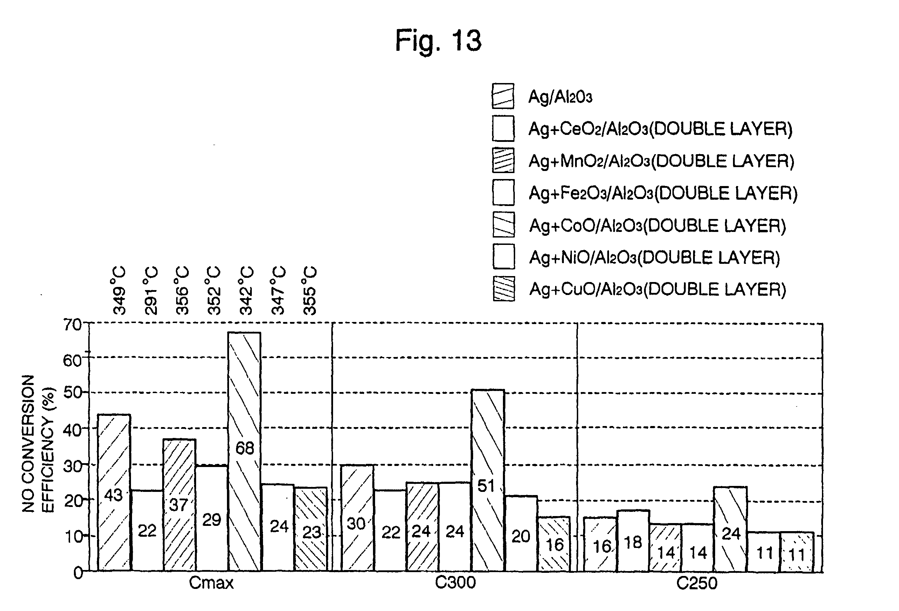

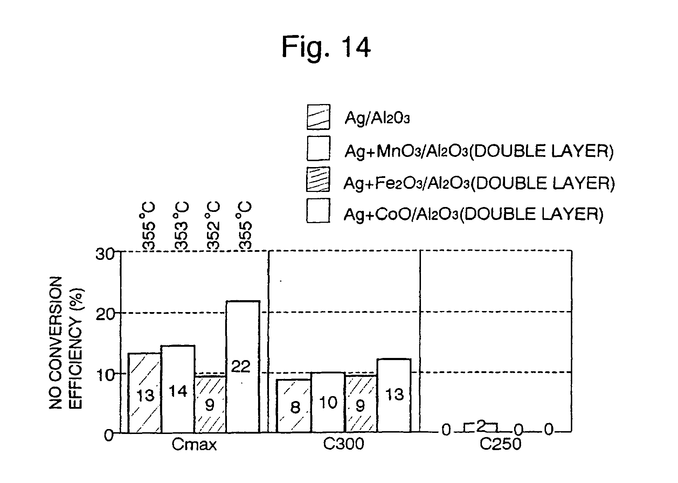

NOx purification efficiency measurements were made under the same condition in which the inlet temperature of simulated exhaust gas was increased at a rate of 30°C/min after holding the simulated exhaust gas at 160°C for five minutes. The result of C300 NOx purification efficiency and Cmax temperature measurements of the sample double layer first catalysts SCF14 to SCF19 before and after the sulfuration treatment is summarized in Figures 13 and 14, respectively. C300, C250 and maximum NO conversion efficiency of a comparative single layer exhaust gas purifying catalyst CC24 comprising an Ag/Al₂O₃ under layer only are incorporated in Figures 13 and 14. As apparent from Figures 13 and 14, only the sample double layer first catalyst SCF17 shows C300, C250 and maximum NO conversion efficiency before and after the sulfuration treatment higher than the comparative single layer exhaust gas purifying catalyst CC24, and the remaining sample double layer first catalysts SCF14 to SCF16, SCF18 and SCF19 show C300, C250 and maximum NO conversion efficiency before and after the sulfuration treatment lower than the comparative single layer exhaust gas purifying catalyst CC24. This fact reveals that the double layer first catalyst which is effective in converting NO to NO₂ is one comprising an over layer of an oxide of Co as a second catalytic metal.

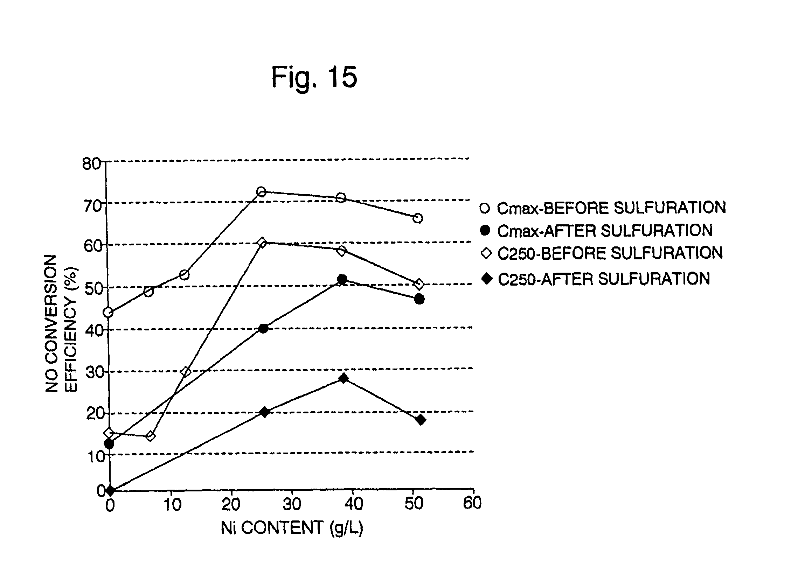

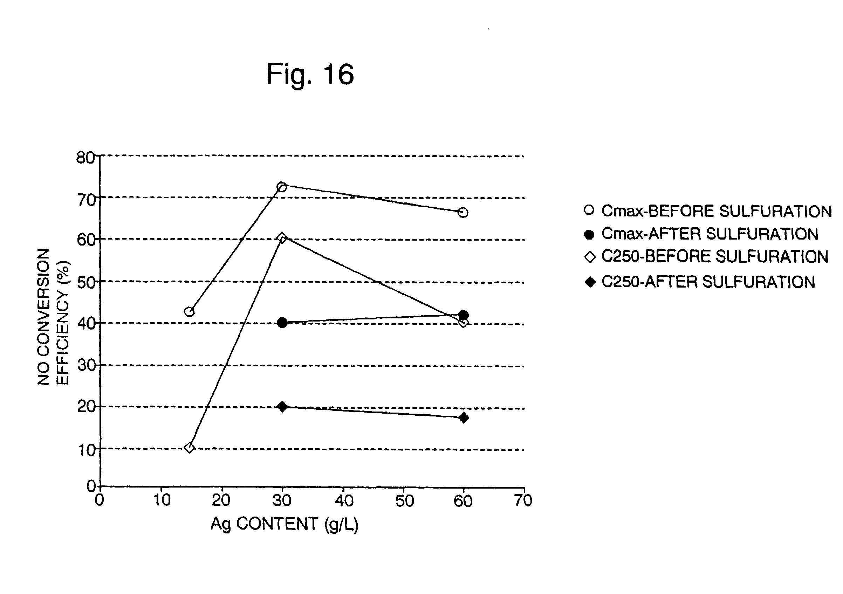

As described above, with respect to C300, C250 and maximum NO conversion efficiency before and after the sulfuration treatment, the Ag-Ni/Al₂O₃ first catalyst SCF6 which is impregnated with first and second catalytic metals Ag and Ni, simultaneously, is most superior to the remaining first catalyst. In light of this, C300, C250 and maximum NO conversion efficiency measurements before and after the sulfuration treatment were made for Ag-Ni/Al₂O₃ first catalysts having different Ni contents under the same condition in which the inlet temperature of simulated exhaust gas was increased at a rate of 30°C/min after holding the simulated exhaust gas at 160°C for five minutes. NOx purification efficiency measurements were made under the same condition in which the inlet temperature of simulated exhaust gas was increased at a rate of 25°C/min after holding the simulated exhaust gas at 160°C for five minutes. Figure 15 shows the result of measurements of C250 and maximum NOx purification efficiency with respect to Ni content for Ag-Ni/Al₂O₃ first catalysts containing Ni and 30 g/L Ag before and after the sulfuration treatment. As apparent from Figure 15, C250 and maximum NOx purification efficiency has peaks at an approximately 26 g/L Ni content when the Ag-Ni/Al₂O₃ first catalyst is before the sulfuration treatment and at an approximately 39 g/L Ni content when the Ag-Ni/Al₂O₃ first catalyst is after the sulfuration treatment. This facts reveals that, for the Ag-Ni/Al₂O₃ first catalyst containing 30 g/L Ag, the Ni content is preferred to be between 20 and 50 g/L, and more specifically between 25 and 40 g/L. Figure 16 shows the result of measurements of C250 and maximum NOx purification efficiency with respect to Ag content for Ag-Ni/Al₂O₃ first catalysts containing Ag and 26 g/L Ni before and after the sulfuration treatment. As apparent from Figure 16, it is revealed that, for the Ag-Ni/Al₂O₃ first catalyst containing 26 g/L Ni, the Ag content is preferred to be between 20 and 60 g/L, and more specifically between 30 and 60 g/L.

From the above evaluation, the Ag-Ni/Al₂O₃ first catalysts is preferred to contain 20 to 60 g/L Ag or more specifically 30 to 60 g/L Ag and 20 to 50 g/L Ni or more specifically 25 to 50 g/L Ni.

## Claims

1. An exhaust gas purifying catalyst (1) for purifying exhaust gas from a lean bum engine and/or a diesel engine that has a first catalyst layer (2) for oxidizing NO to NO₂ which contains at least one catalytic metal selected from a group of Ag, Co and Mn supported on at least one base material selected out of alumina, mesopore silicate and FAU-zeolite and a second catalyst layer (3) for reducing the oxidized NO₂ to N₂, said second catalyst layer (3) containing a metal silicate ion-exchanged by a catalytic noble metal and being disposed downstream from said first catalyst layer (3), wherein said first catalyst layer (2) further contains at least one selected out of catalytic metals Ce, Rh and Fe supported on said at least one base material.

2. The exhaust gas purifying catalyst as defined in claim 1, **characterized in that** said first catalyst layer (2) comprises an under catalyst layer coated on a substrate and containing Ag as a catalytic metal and an over catalyst layer coated over said under catalyst layer and containing Co as a catalytic metal.

3. The exhaust gas purifying catalyst as defined in any one of the preceding claims, **characterized in that** said first catalyst layer (2) contains Ce and at least one catalytic metal selected out of Ag and Co.

4. The exhaust gas purifying catalyst as defined in any one of the preceding claims, **characterized in that** said exhaust gas purifying catalyst (1) contains Ag.

5. The exhaust gas purifying catalyst as defined in any one of the preceding claims, **characterized in that** said first catalyst layer (2) contains Ag in a range of from 15 to 150 g per one liter of said substrate, said Ag being supported on alumina as a base material.

6. The exhaust gas purifying catalyst as defined in any one of the preceding claims, wherein said first catalyst (5) contains Ag as said catalytic metal and said first and second catalysts (5, 6) are formed as individual layers on a substrate (4).

## Patentansprüche

1. Abgasreinigungskatalysator (1) für das Reinigen von Abgas eines Magermotors und/oder eines Dieselmotors, der für das Oxidieren von NO zu NO₂ eine erste Katalysatorschicht (2) aufweist, die mindestens ein aus einer Gruppe aus Ag, Co und Mn gewähltes katalytisches Metall enthält, das auf mindestens einem Grundmaterial gewählt aus Aluminiumoxid, mesoporösem Silikat und FAU-Zeolit aufliegt, sowie eine zweite Katalysatorschicht (3) für das Reduzieren des oxidierten NO₂ zu N₂ aufweist, wobei die zweite Katalysatorschicht (3) ein durch ein katalytisches Edelmetall ionengetauschtes Metallsilikat enthält und stromabwärts der ersten Katalysatorschicht (2) angeordnet ist, wobei die erste Katalysatorschicht (2) weiterhin mindestens eines gewählt aus den katalytischen Metallen Ce, Rh und Fe enthält, das auf dem mindestens einen Grundmaterial aufliegt.

2. Abgasreinigungskatalysator nach Anspruch 1, **dadurch gekennzeichnet, dass** die erste Katalysatorschicht (2) eine auf einen Träger aufgebrachte und Ag als katalytisches Metall enthaltende Unterkatalysatorschicht sowie eine über der Unterkatalysatorschicht aufgebrachte und Co als katalytisches Metall enthaltende Überkatalysatorschicht umfasst.

3. Abgasreinigungskatalysator nach einem der vorhergehenden Ansprüche, **dadurch gekennzeichnet, dass** die erste Katalysatorschicht (2) Ce und mindestens ein katalytisches Metall gewählt aus Ag und Co enthält.

4. Abgasreinigungskatalysator nach einem der vorhergehenden Ansprüche, **dadurch gekennzeichnet, dass** der Abgasreinigungskatalysator (1) Ag enthält.

5. Abgasreinigungskatalysator nach einem der vorhergehenden Ansprüche, **dadurch gekennzeichnet, dass** die erste Katalysatorschicht (2) Ag in einem Bereich von 15 bis 150 g pro Liter des Substrats enthält, wobei Ag auf Aluminiumoxid als Grundmaterial aufliegt.

6. Abgasreinigungskatalysator nach einem der vorhergehenden Ansprüche, **dadurch gekennzeichnet, dass** der erste Katalysator (5) Ag als katalytisches Metall enthält und der erste und der zweite Katalysator (5, 6) als einzelne Schichten auf einem Träger (4) ausgebildet sind.

## Revendications

1. Catalyseur pour la purification des gaz d'échappement (1) provenant d'un moteur d'un mélange pauvre et/ou d'un moteur diesel comportant une première couche catalytique (2) servant à l'oxydation du NO en NO₂, et comprenant au moins un matériau catalytique choisi dans un groupe constitué par Ag, Co et Mn qui est supporté par au moins un matériau de base choisi dans le groupe constitué par l'alumine, le silicate mésopore et le zéolithe FAU, et une deuxième couche catalytique (3) pour la réduction du NO₂ en N₂, ladite deuxième couche catalytique (3) comprenant un silicate métallique dont les ions ont été échangés par un métal précieux catalytique et qui est reparti en aval de ladite première couche catalytique (2), la première couche catalytique (2) comprenant en plus au moins un matériau catalytique choisi dans le groupe constitué par Ce, Rh et Fe supporté par au moins un matériau de base.

2. Catalyseur pour la purification des gaz d'échappement suivant la revendication 1, **caractérisé en ce que** ladite première couche catalytique (2) comporte une couche catalytique inférieure revêtant un substrat et comprenant de l'Ag comme métal catalytique et une couche catalytique supérieure revêtant ladite couche catalytique inférieure et comprenant du Co comme métal catalytique.

3. Catalyseur pour la purification des gaz d'échappement suivant l'une quelconque des revendications précédentes **caractérisé en ce que** ladite première couche catalytique (2) contient du Ce et au moins un métal catalytique choisi dans le groupe constitué par Ag et Co.

4. Catalyseur pour la purification des gaz d'échappement suivant l'une quelconque des revendications précédentes **caractérisé en ce que** ledit catalyseur pour la purification des gaz d'échappement (1) contient de l'Ag.

5. Catalyseur pour la purification des gaz d'échappement suivant l'une quelconque des revendications précédentes **caractérisé en ce que** ladite première couche catalytique (2) contient de l'Ag dans une plage de 15 à 150 g par litre dudit substrat, ledit Ag étant supporté par de l'alumine comme matériau de base.

6. Catalyseur pour la purification des gaz d'échappement suivant l'une quelconque des revendications précédentes, ledit premier catalyseur (5) contenant de l'Ag comme ledit métal catalytique et lesdits premier et deuxième catalyseurs (5, 6) sont formés comme des couches individuelles sur un substrat (4).
